# EUROPEAN PATENT APPLICATION

(11) **EP 4 753 049 A1**
(43) Date of publication of application: **03.06.2026**
(21) Application number: 24845238.5
(22) Date of filing: 13.06.2024
(51) Int. Cl.: H01M 50/291, H01M 50/35, H01M 50/213, H01M 50/231, H01M 50/271, H01M 50/293, H01M 50/342

(54) **POWER SUPPLY DEVICE**

(30) Priority: 24.07.2023 JP 2023120065
(71) Applicant: Panasonic Intellectual Property Management Co., Ltd., Kadoma-shi, Osaka 571-0057 (JP)
(72) Inventor: LU Jia, Kadoma-shi, Osaka 571-0057 (JP); SAKAMOTO Tomonori, Kadoma-shi, Osaka 571-0057 (JP)
(74) Representative: Novagraaf International SA
(86) International application number: PCT/JP2024/021507
(87) International publication number: WO 2025/022856

(57) **Abstract**

A power supply device includes a battery assembly and an external case accommodating the battery assembly therein. The battery assembly includes secondary battery cells and a battery holder made of resin and disposing the secondary battery cells at fixed positions. Each secondary battery cell includes a discharge valve configured to open when an internal pressure exceeds a predetermined pressure. The battery assembly further includes a horizontal structural body made of metal and passing through a central portion of the battery assembly in a horizontal direction. The power supply device has a gas-discharge passage communicating an inside and an outside of the battery assembly with each other via the horizontal structural body.

## Description

### TECHNICAL FIELD

The present disclosure relates to a power supply device including secondary battery cells accommodated in an external case, and particularly to a power supply device in which secondary battery cells each having a discharge valve configured to open when an internal pressure becomes higher than a predetermined pressure are accommodated in an external case.

### BACKGROUND ART

A power supply device in which a battery assembly including battery cells is accommodated in an external case is used as a power supply for a power storage system for factories, homes, and the like, a power supply for vehicles such as hybrid vehicles and electric vehicles, and the like. In these power supply devices, battery cells are incorporated in an external case as a battery assembly, and a discharge valve is provided in the battery cell to ensure safety. The discharge valve of the battery cell is configured to open to prevent rupture of the battery case when an internal pressure becomes higher than a predetermined pressure at the time of abnormality. Since the discharge valve opens when the battery cell is in an abnormal use state, a temperature and pressure of ejected materials, such as a discharged gas, become high, causing various thermal damages.

### CITATION LIST

### Patent Literature

PTL 1: International Publication No. WO2020/166501

### SUMMARY OF INVENTION

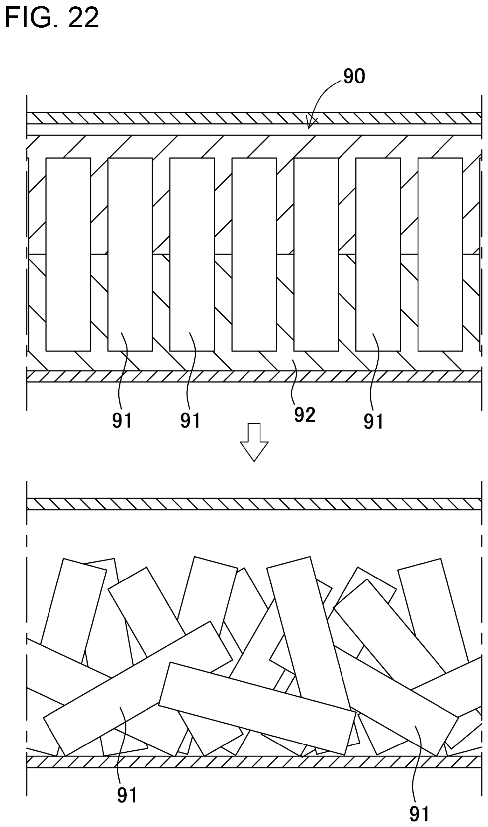

In the power supply device described above, when one of the battery cells undergoes thermal runaway and discharges a high-temperature and high-pressure gas or the like, thermal damage may also occur in the other battery cells, and the entire battery assembly may spread fire. As illustrated in FIG. 22, when battery assembly 90 including a large number of secondary battery cells 91 catches fire, battery holder 92 made of plastic may be melted by high temperature. When battery holder 92 is melted, as illustrated in FIG. 22, secondary battery cells 91 are not supported in predetermined postures, and secondary battery cells 91 may randomly overlap one another. When secondary battery cells 91 overlap one another as described above, an air passage for discharging a gas-discharged from secondary battery cells 91 to an outside is not secured, and an inside is filled with the gas, which is not a preferable state. In particular, since a high capacity has been required for a power supply device, a large number of secondary battery cells may be accommodated densely, and thus, in a power supply device including such a battery assembly, a technique of quickly discharging a gas generated inside the battery assembly to the outside is desired.

A power supply device according to an aspect of the present disclosure includes a battery assembly and an external case accommodating the battery assembly therein. The battery assembly includes a plurality of secondary battery cells and a battery holder made of resin and disposing the plurality of secondary battery cells at fixed positions. Each of the plurality of secondary battery cells includes a discharge valve configured to open when an internal pressure of the each of the plurality of secondary battery cells exceeds a predetermined pressure. The battery assembly further includes a horizontal structural body made of metal and passing through a central portion of the battery assembly in a horizontal direction. The power supply device has a gas-discharge passage communicating an inside and an outside of the battery assembly with each other via the horizontal structural body.

In the power supply device in the present disclosure, the gas-discharge passage communicates the inside and outside of the battery assembly with each other via the horizontal structural body made of metal and passing through the central portion of the battery assembly in the horizontal direction. Even when the secondary battery cell goes into thermal runaway and spreads fire to another secondary battery cell and causes the battery assembly to catch fire, a gas generated inside the battery assembly is reliably discharged to the outside of the battery assembly and is safely discharged to an outside of the external case.

### BRIEF DESCRIPTION OF DRAWINGS

FIG. 1 is a perspective view of a power supply device according to Exemplary Embodiment 1 of the present disclosure.
FIG. 2 is a vertical cross-sectional view of the power supply device along line II-II shown in FIG. 1.
FIG. 3 is a vertical cross-sectional view of the power supply device along line III-III shown in FIG. 1.
FIG. 4 is a horizontal cross-sectional view of the power supply device along line IV-IV shown in FIG. 1.
FIG. 5 is an exploded perspective view of the power supply device illustrated in FIG. 1.
FIG. 6 is an exploded rear perspective view of the power supply device illustrated in FIG. 5 viewed from below.
FIG. 7 is an exploded perspective view of an inner case of the power supply device illustrated in FIG. 5.
FIG. 8 is an exploded rear perspective view of the inner case illustrated in FIG. 7 viewed from below.
FIG. 9 is a vertical cross-sectional view of the power supply device along line IX-IX shown in FIG. 1.
FIG. 10 is an enlarged cross-sectional view of the power supply device shown in FIG. 9 for illustrating an exhaust duct.
FIG. 11 is an enlarged cross-sectional view of the power supply device shown in FIG. 2 for illustrating the exhaust duct.
FIG. 12 is an enlarged plan view of a battery assembly of the power supply device illustrated in FIG. 4.
FIG. 13 is a schematic cross-sectional view of the power supply device according to Embodiment 1 of the present disclosure causing a large number of secondary battery cells to randomly overlap for illustrating a state in which fire spreads inside the power supply device.
FIG. 14 is a cross-sectional perspective view of another example of a horizontal structural body of the power supply device according to Embodiment 1.
FIG. 15 is a cross-sectional perspective view of still another example of the horizontal structural body.
FIG. 16 is a cross-sectional perspective view of still another example of the horizontal structural body.
FIG. 17 is a cross-sectional perspective view of still another example of the horizontal structural body.
FIG. 18 is a cross-sectional perspective view of still another example of the horizontal structural body.
FIG. 19 is a cross-sectional view of still another example of the horizontal structural body.
FIG. 20 is an exploded perspective view of an example of fixing the horizontal structural body to an outer peripheral wall of the inner case.
FIG. 21 is a vertical cross-sectional view of a power supply device according to Exemplary Embodiment 2 of the present disclosure.
FIG. 22 is a schematic cross-sectional view of a conventional power supply device causing a large number of secondary battery cells to randomly overlap for illustrating a state in which fire spreads inside the power supply device.

### DESCRIPTION OF EMBODIMENT

A power supply device according to an aspect of the present disclosure includes a battery assembly and an external case accommodating the battery assembly therein. The battery assembly includes a plurality of secondary battery cells and a battery holder made of resin and disposing the plurality of secondary battery cells at fixed positions. Each of the plurality of secondary battery cells includes a discharge valve configured to open when an internal pressure of the each of the plurality of secondary battery cells exceeds a predetermined pressure. The battery assembly further includes a horizontal structural body made of metal and passing through a central portion of the battery assembly in a horizontal direction. The power supply device has a gas-discharge passage communicating an inside and an outside of the battery assembly with each other via the horizontal structural body.

In the above configuration, the battery assembly in which the plurality of secondary battery cells are disposed at the fixed positions by the battery holder includes the horizontal structural body made of metal and passing through the central portion in the horizontal direction. Therefore, even when one of the secondary battery cells goes into thermal runaway, and a discharged high-temperature and high-pressure gas causes other secondary battery cells to spread fire, and causes the battery assembly to spread fire, melting the battery holder made of resin and causing the secondary battery cells to overlap one another in a random posture, the gas-discharge passage that communicates the inside and outside of the battery assembly with each other via the horizontal structural body made of metal is formed, and thus the gas generated inside the battery assembly is efficiently discharged by passing through the gas-discharge passage.

In the power supply device according to another aspect of the present disclosure, the horizontal structural body has a cross-sectional shape having a groove or a tubular portion constituting a ventilation portion extending in an axial direction. In the above configuration, the horizontal structural body having the cross-sectional shape having the tubular portion or the groove allows a gas to pass through the tubular portion or the groove extending in the axial direction as the ventilation portion, and the gas inside the battery assembly is efficiently exhausted to the outside.

In the power supply device according to still another aspect of the present disclosure, the horizontal structural body is a steel beam. In the above configuration, the horizontal structural body made of steel beam provides an advantage that the horizontal structural body having excellent heat resistance is easily prepared. The horizontal structural body made of a steel beam increase rigidity of the device while providing the ventilation portion, providing an advantage that the gas-discharge passage is reliably secured when a large external force acts on the horizontal structural body.

In the power supply device according to still another aspect of the present disclosure, the steel beam is one of a channel steel beam, an angle steel beam, a C-steel beam, an I-steel beam, an H-steel beam, a T-steel beam, a steel pipe, and a square steel pipe. The above configuration provides an advantage of reducing manufacturing cost by selectively with commercially available steel beam as the horizontal structural body.

In the power supply device according to still another aspect of the present disclosure, the horizontal structural body has a plurality of ventilation holes opened in one of a side surface, a vertical surface, and a bottom surface thereof. In the above configuration, the ventilation holes opening in one of the side surface, the vertical surface, and the bottom surface of the horizontal structural body allow the gas generated inside the battery assembly to be exhausted while effectively flowing into the ventilation portion of the horizontal structural body through the ventilation holes. This configuration also provides an advantage of reducing a weight by opening the ventilation holes in the horizontal structural body made of metal.

In the power supply device according to still another aspect of the present disclosure, the battery holder has a partition gap provided therein, the partition gap extending in the horizontal direction and partitioning the battery assembly. The horizontal structural body is inserted into the partition gap. In the above configuration, the horizontal structural body inserted into the partition gap partitioning the battery assembly allows the horizontal structural body passing through the battery assembly to be simply and easily inserted. When fire spreads inside the battery assembly, the gas generated from regions on both sides partitioned by the partition gap is efficiently exhausted.

In the power supply device according to still another aspect of the present disclosure, the battery holder may accommodate the plurality of secondary battery cells disposed in vertical postures and arranged parallel to one another in the horizontal direction. In the above configuration, even when the secondary battery cells disposed in upright postures in the battery holder fall due to fire spreading and randomly overlap one another, the gas generated inside the battery assembly is efficiently discharged to the outside.

In the power supply device according to still another aspect of the present disclosure, the horizontal structural body may be fixed to the external case. The above configuration provides an advantage that the external case is reinforced with the horizontal structural body by fixing the horizontal structural body to the external case. This configuration provides an advantage that the horizontal structural body is reliably disposed at a predetermined position with respect to the battery block in a correct posture.

In the power supply device according to still another aspect of the present disclosure, the external case includes: an inner case accommodating the battery assembly therein; and an outer case covering the inner case. The inner case has a box shape including a lower surface plate, an upper surface plate, and an outer peripheral wall connecting the lower surface plate to the upper surface plate. The inner case further includes a fixing portion on the lower surface plate for fixing the horizontal structural body. The horizontal structural body is fixed to the fixing portion with a fixing device. The above configuration increases rigidity of the inner case via the horizontal structural body by fixing the horizontal structural body to the lower surface plate of the inner case. Therefore, even when the gas is generated inside the inner case and a large load is applied to the inner case at the time of abnormality, this configuration provides an advantage of reducing deformation and breakage of the inner case and enhancing safety by reinforcing the inner case by the horizontal structural body. This configuration also provides an advantage that the horizontal structural body is easily and rigidly fixed by fixing the horizontal structural body to the fixing portion provided on the lower surface plate of the inner case with the fixing device.

In the power supply device according to still another aspect of the present disclosure, the external case includes: an inner case accommodating the battery assembly therein; and an outer case covering the inner case. The inner case has a box shape including a lower surface plate, an upper surface plate, and an outer peripheral wall connecting the lower surface plate to the upper surface plate. Both end portions of the horizontal structural body are fixed to the outer peripheral wall with fixing devices. The above configuration provides an advantage that, since both end portions of the horizontal structural body are fixed to the outer peripheral wall of the inner case, a central portion of the inner case is structurally reinforced. In particular, the rigidity of the inner case is enhanced by applying tension to the horizontal structural body via the fixing member fixed to the outer peripheral wall.

In the power supply device according to still another aspect of the present disclosure, the external case includes: an inner case accommodating the battery assembly therein; and an outer case covering the inner case. The inner case includes an outer peripheral wall including an inner plate and an outer plate stacked on each other. A part of the outer peripheral wall where the inner plate and the outer plate are stacked on each other constitutes a laminated portion of the outer peripheral wall with a laminated structure. The laminated portion has a recess having a predetermined depth and extending in a surface direction partially in one or both of respective surfaces of the inner plate and the outer plate facing each other, the recess constituting an exhaust duct closed between the inner plate and the outer plate. The exhaust duct communicates with an inside of the inner case via an inner opening opened in the inner plate, and communicates with an outside of the inner case via an outer opening opened in the outer plate. The inner opening and the outer opening are disposed at both end portions of the exhaust duct.

In to the above configuration, the gas discharged to the outside of the battery assembly via the gas-discharge passage passes through the exhaust duct provided in the inner case and exhausted to the outside, thereby allowing the gas to be safely exhausted while preventing spread of fire in the inner case.

In the power supply device according to still another aspect of the present disclosure, the horizontal structural body is connected to the exhaust duct of the inner case, and the gas-discharge passage communicates with an inside of the exhaust duct. In the above configuration, since the horizontal structural body is coupled to the exhaust duct and the gas-discharge passage communicates with the inside of the exhaust duct, the gas discharged from the inside of the battery assembly through the gas-discharge passage efficiently flows into the inner case and is exhausted to the outside of the inner case.

Exemplary embodiments of the present disclosure will be described below with reference to the drawings. The embodiments described below are examples for embodying the technical idea of the invention, and the invention is not limited to the following. The present description does not specify members described in the claims as members in the embodiments. In particular, dimensions, materials, shapes, relative dispositions, and the like of the components described in the embodiments are merely examples without limiting the scope of the invention thereto unless otherwise specified. Sizes, positional relationships, and the like of members illustrated in the drawings may be exaggerated for clarity of description. Further, in the following description, the same names and reference numerals denote the same or similar members, and detailed description thereof will be omitted as appropriate. Further, in the elements constituting the invention, a plurality of elements may be constituted by the same member, and the plurality of elements may be shared by one member. Conversely, a function of one member can be shared by a plurality of members.

The power supply device according to the present disclosure is suitable for use as a power supply for a power storage system for homes, businesses, and factories, or a backup power supply for servers in a stationary power storage application, or a power supply for vehicles such as hybrid vehicles and electric vehicles, and for heavy machinery. Hereinafter, a power supply device used as a power supply of a power storage system will be described as an embodiment of the present disclosure.

### Exemplary Embodiment 1

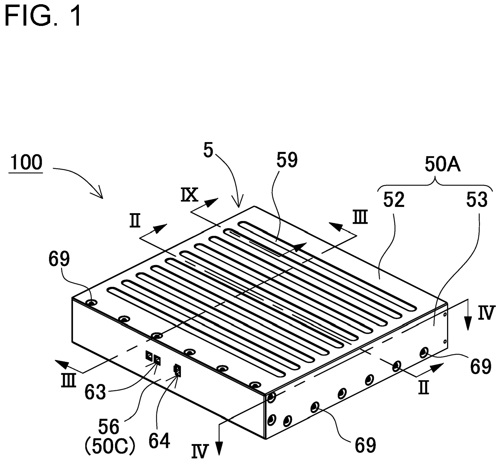

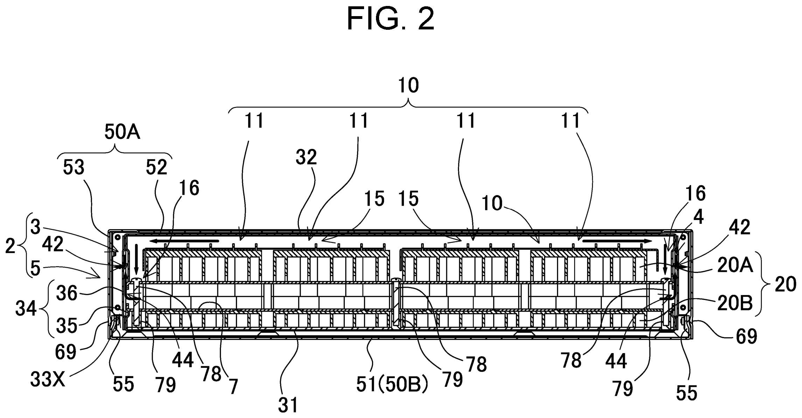

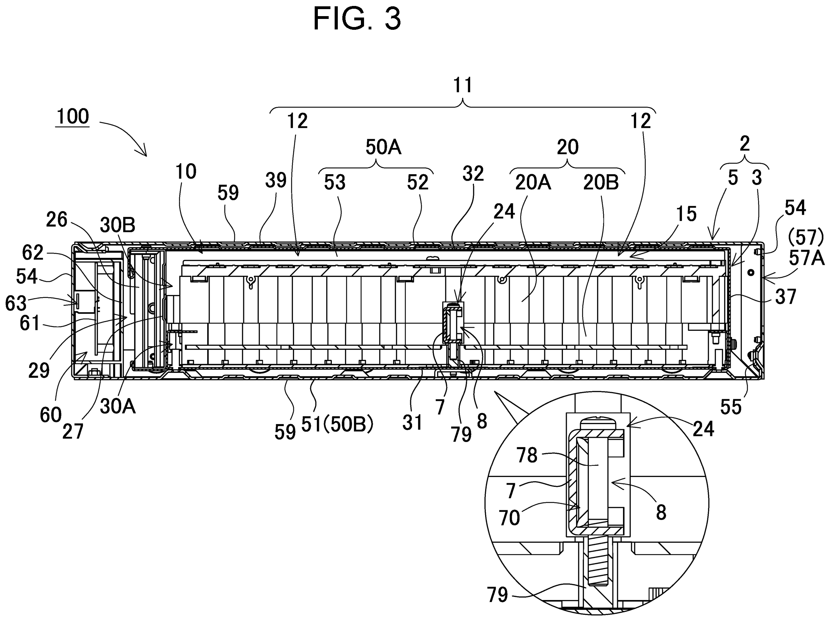

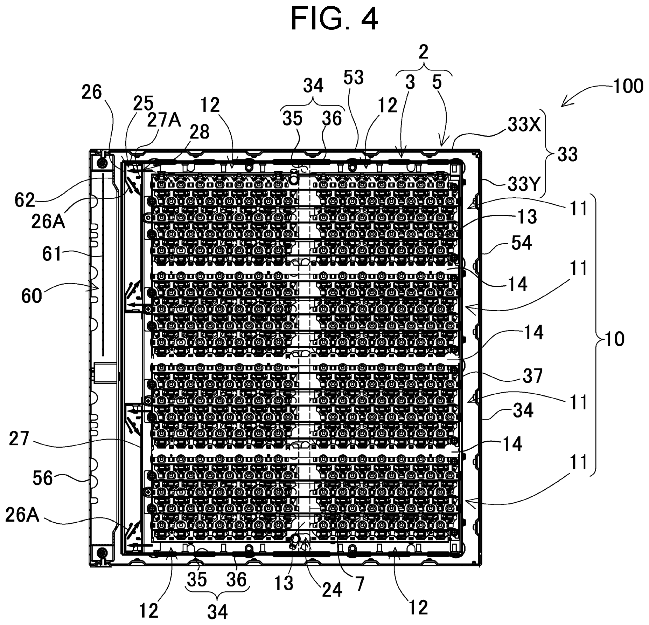

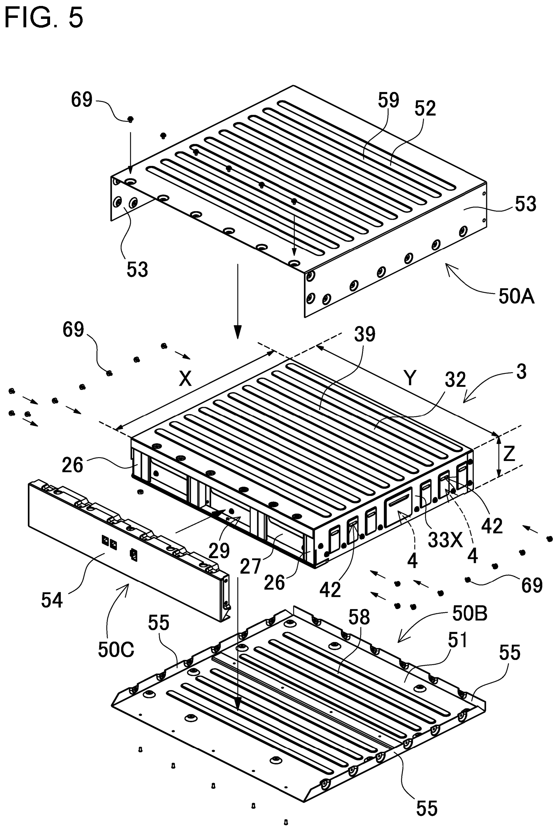

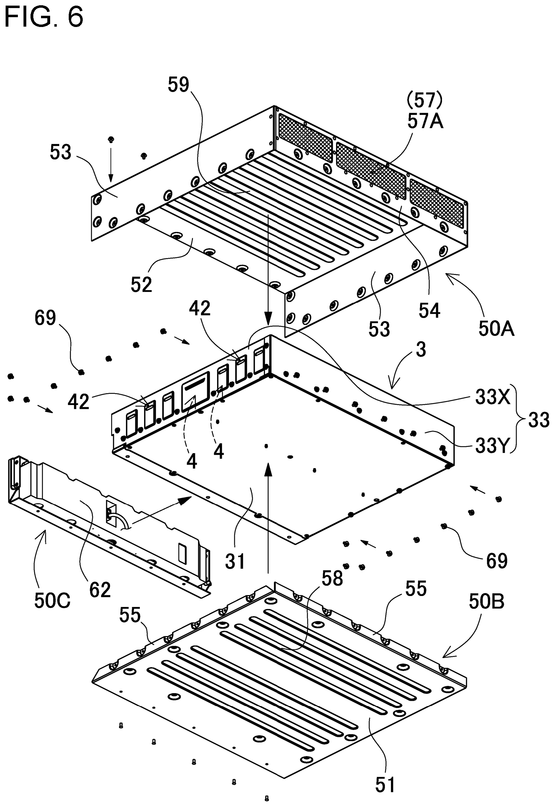

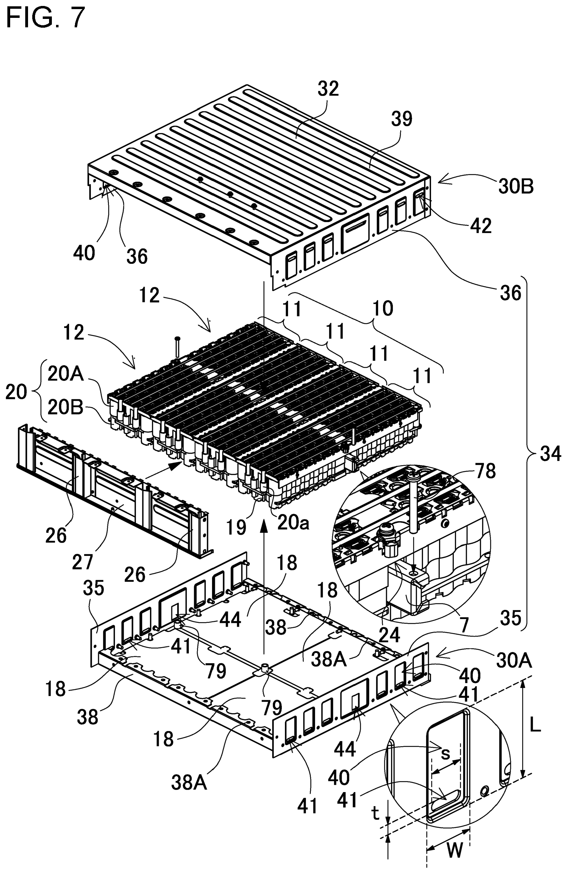

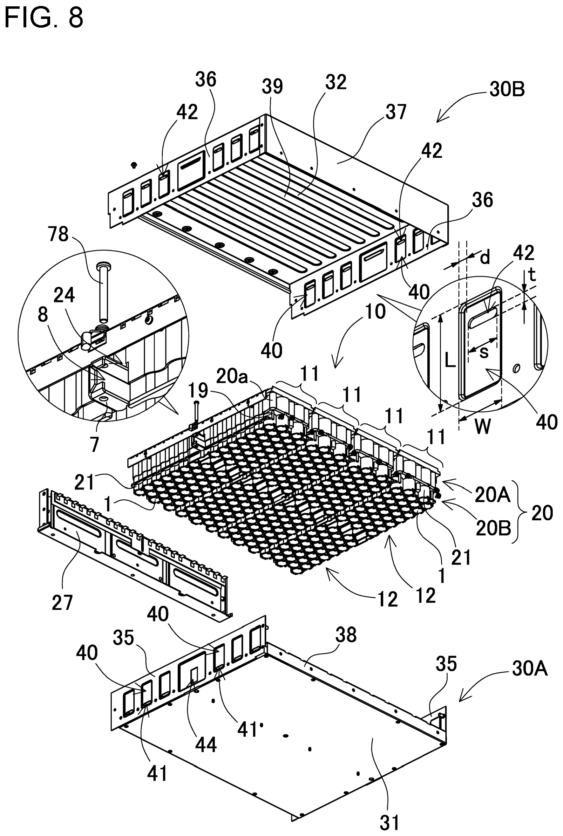

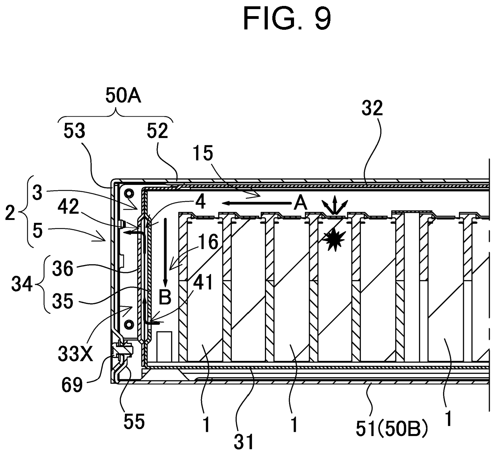

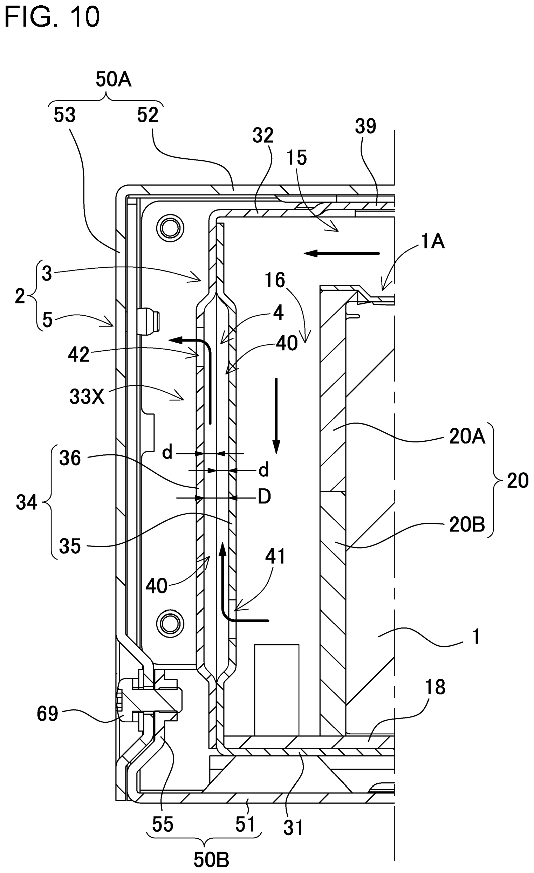

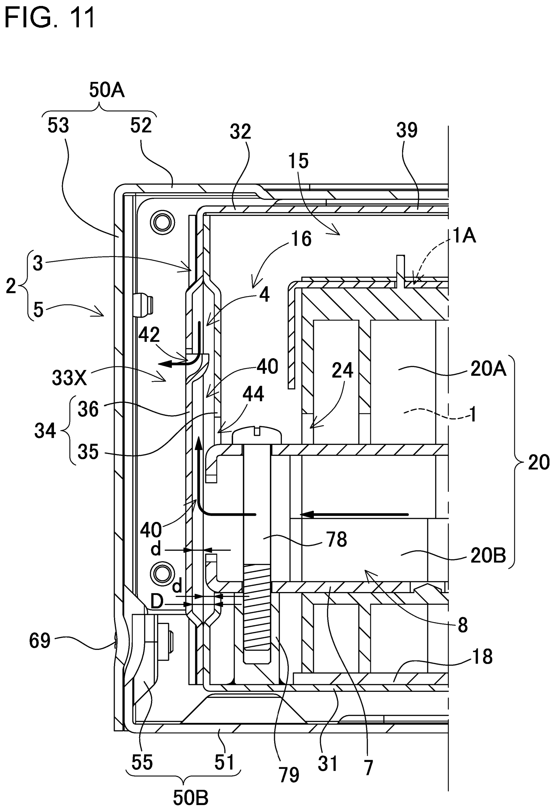

A power supply device according to Exemplary Embodiment 1 of the present disclosure is illustrated in FIGS. 1 to 11. FIG. 1 is a perspective view of the power supply device according to Embodiment 1. FIG. 2 is a cross-sectional view of the power supply device along line II-II shown in FIG. 1. FIG. 3 is a cross-sectional view of the power supply device along line III-III shown in FIG. 1. FIG. 4 is a horizontal cross-sectional view of the power supply device along line IV-IV shown in FIG. 1. FIG. 5 is an exploded perspective view of the power supply device shown in FIG. 1. FIG. 6 is an exploded rear perspective view of the power supply device shown in FIG. 5 as viewed from below. FIG. 7 is an exploded perspective view of an inner case. FIG. 8 is an exploded rear perspective view of the inner case shown in FIG. 7 as viewed from below. FIG. 9 is a cross-sectional view line IX-IX of the power supply device along line IX-IX shown in FIG. 1. FIGS. 10 and 11 are enlarged cross-sectional views of the inner case for illustrating an exhaust duct.

Power supply device 100 illustrated in these drawings includes battery assembly 10 and external case 2 accommodating battery assembly 10 therein. Battery assembly 10 includes secondary battery cells 1 and battery holder 20 disposing battery cells 10 at fixed positions. Each battery cell 10 includes a discharge valve configured to open when an internal pressure of the battery cell exceeds a predetermined pressure. Battery assembly 10 includes further horizontal structural body 7 made of metal and passing through a central portion of battery holder 20 in a horizontal direction. Battery assembly 10 includes gas-discharge passage 8 communicating an inside and outside of battery assembly 10 with each other via horizontal structural body 7. The power supply device according to the present disclosure has a structure in which battery assembly 10 formed by assembling a plurality of secondary battery cells 1 is accommodated in external case 2. Battery assembly 10 includes gas-discharge passage 8 communicating the inside and outside of battery assembly 10 with each other via horizontal structural body 7 made of metal and passing through the central portion of battery holder 20. Therefore, as for a structure other than the battery assembly, all other structures that have already been adopted or will be developed in the future can be adopted. Hereinafter, as an example of external case 2 accommodating therein battery assembly 10, external case 2 including inner case 3 and outer case 5 will be detailed below.

### Secondary Battery Cell 1

In power supply device 100 illustrated in FIGS. 2, 4, and 7 to 9, battery assembly 10 in which secondary battery cells 1 are disposed at the fixed positions by battery holder 20 is accommodated in external case 2. Each secondary battery cell 1 is a cylindrical secondary battery having a cylindrical outer can. In cylindrical secondary battery cell 1, an electrode body is accommodated in a bottomed cylindrical external can made of metal and filled with an electrolytic solution. An opening of the external can is crimped with a sealing body and airtightly closed with the sealing body. The sealing body is airtightly fixed to the external can via an insulating material. The sealing body includes a discharge valve configured to open when an internal pressure of the battery cell becomes higher than a predetermined pressure so as to discharge ejected materials, such as a gas. Cylindrical secondary battery cell 1 has first end surface 1A closed by the sealing body, and includes a crimped ridge with a ring shape formed on an outer peripheral edge of first end surface 1A by crimping. In cylindrical secondary battery cell 1, the sealing body and the external can function as a positive electrode and a negative electrode, respectively.

As secondary battery cell 1, a non-aqueous electrolyte secondary battery having high energy efficiency, such as a lithium-ion secondary battery, may be typically used. The power supply device according to the present disclosure does not necessarily specify the secondary battery cell as a lithium-ion secondary battery. Any rechargeable battery, such as a nickel-metal hydride battery or a nickel-cadmium battery, may be used as the secondary battery cell.

### Battery Holder 20

Battery holder 20 positions secondary battery cells 1 at the fixed positions in predetermined postures. Secondary battery cells 1 are disposed in vertical postures in which first end surface 1A including the discharge valve faces upward. Secondary battery cells 1 are arranged parallel to one another in the horizontal direction. In accordance with the present embodiment, a vertical direction is perpendicular to the horizontal direction. Battery holder 20 includes holding portions 21 that accommodate secondary battery cells 1 inside and cover and hold outer peripheral surfaces of secondary battery cells 1, and holds each secondary battery cell 1 at a fixed position via holding portion 21. Battery holder 20 shown in FIGS. 2, 7, and 8 is divided into first holder 20A and second holder 20B at a middle in a longitudinal direction of secondary battery cell 1, and holds secondary battery cell 1 at the fixed position by sandwiching secondary battery cell 1 from both ends of secondary battery cell 1. Battery holder 20 shown in FIG. 2 holds secondary battery cells 1 in a posture in which secondary battery cells 1 extend parallel to one another and a posture in which first end surfaces 1A are flush with one another.

Battery holder 20 illustrated in FIGS. 7 and 8 includes holding portions 21 configured to accommodate secondary battery cells 1 stacked in a staggered manner in a plan view. Thus, a structure in which secondary battery cells 1 are stacked in a staggered manner may be accommodated in a space-saving manner by positioning secondary battery cells 1 in adjacent rows in valleys between secondary battery cells 1 linearly disposed side by side. Therefore, battery holder 20 efficiently accommodates therein a large number of secondary battery cells 1 with a high capacity. Battery holder 20 that accommodates therein secondary battery cells 1 in multiple stages and multiple rows is made of resin had having a shape to connect holding portions 21 to one another in multiple stages and multiple rows. Battery holder 20 is preferably made of material having high insulating properties and heat resistance, for example, resin, such as polycarbonate or ABS.

### Battery Assembly 10

Secondary battery cells 1 are disposed at the fixed positions by battery holder 20 to constitute battery block 11, and are accommodated in external case 2 as battery assembly 10 in which battery blocks 11 are coupled. Battery assembly 10 shown in FIG. 4 includes four battery blocks 11 disposed in four stages in front and rear in the drawing. Each battery block 11 includes two battery units 12 partitioned into left and right. 35 secondary battery cells 1 are disposed in each battery unit 12. 70 secondary battery cells 1 are disposed in entire battery block 11. Therefore, 280 secondary battery cells 1 are disposed in entire battery assembly 10. Each battery block 11 is partitioned into two battery units 12 via partition gap 24. In each of battery units 12, 35 secondary battery cells 1 are disposed in five rows in a front-rear direction, with seven cells in each row side by side in a left-right direction in FIG. 4. Two battery units 12 partitioned into the left and right are disposed in an extending direction of each battery row, and 2×7 secondary battery cells 1 located on the same straight line are connected to one another with lead plates 13.

### Lead Plate 13

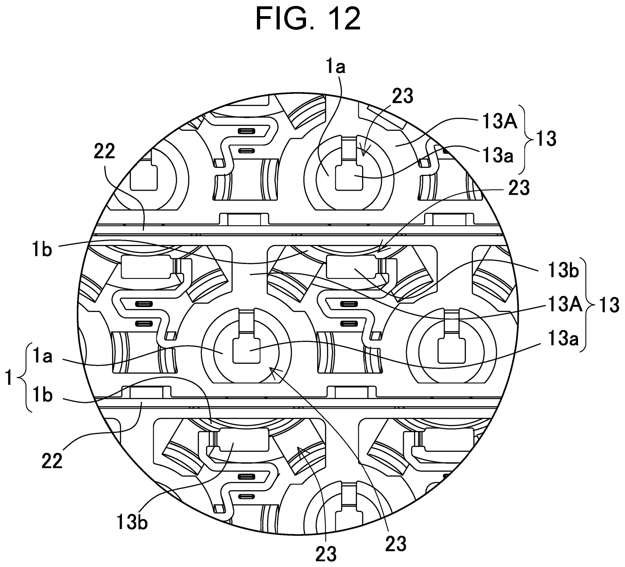

As illustrated in FIG. 4, secondary battery cells 1 accommodated in battery holder 20 are connected to one another with lead plates 13 on an upper surface side of battery holder 20. Lead plates 13 connect positive and negative electrodes on first end surface 1A of secondary battery cell 1 to connect secondary battery cells 1 in parallel and in series to one another. In secondary battery cell 1 illustrated in FIG. 12, one of the electrodes is center electrode 1a disposed at a central portion of the sealing body, and the other electrode is crimping ridge 1b of the external can. Battery block 11 illustrated in FIG. 4 includes lead plates 13 disposed on an upper surface of battery holder 20 along the battery rows linearly disposed between battery units 12 adjacent to each other on the left and right. Lead plate 13 disposed between the adjacent battery rows has a structure in which lead plate 13 connects secondary battery cells 1 of one battery row disposed linearly in parallel to one another, connects secondary battery cells 1 of the other battery row in parallel to one another, and connects secondary battery cells 1 in the adjacent battery rows in series to one another.

Lead plate 13 illustrated in FIG. 12 includes main body 13A extending in an extending direction of the battery row, and further includes first coupling tab 13a and second coupling tab 13b. First coupling tab 13a protrudes from main body 13A and is connected to center electrode 1a of secondary battery cell 1 of the battery row facing main body 13A. Second coupling tab 13b protrudes from main body 13A and is connected to crimping ridge 1b of secondary battery cell 1 of the adjacent battery row. Insulating wall 22 insulating adjacent lead plates 13 from each other is provided between lead plates 13. Insulating wall 22 is disposed above first end surface 1A of the secondary battery cell constituting the battery row to be offset from center electrode 1a, thereby preventing a short circuit between secondary battery cells 1 connected in series. Electrode windows 23 for exposing center electrode 1a and caulking ridge 1b of secondary battery cell 1 are opened on both sides of insulating wall 22.

As described above, each lead plate 13 disposed between the adjacent battery rows connects 14 secondary battery cells 1 constituting the battery row disposed linearly in parallel to each other, and connects the secondary battery cells 1 in the battery rows disposed adjacent to each other in series, so that in entire battery block 11, 70 secondary battery cells 1 are connected in 14 parallel and in 5 series. Further, adjacent battery blocks 11 are connected in series by coupling bus bars 14, and in entire battery assembly 10, 280 secondary battery cells 1 are connected in 14 parallel and 20 series. Lead plate 13 and coupling bus bar 14 are formed of a metal plate, such as nickel or aluminum, having high conductivity. The present disclosure does not limit a connection state of the secondary battery cells to the above. In the battery assembly, the number and disposition of the secondary battery cells constituting each battery block can be variously changed, and disposition of the plurality of battery blocks can be variously changed.

### Horizontal Structural Body 7, Gas-Discharge Passage 8

In battery assembly 10 illustrated in FIGS. 2 to 4, horizontal structural body 7 passes through four battery blocks 11 disposed in the four stages in the front and the rear. In battery assembly 10, horizontal structural body 7 passes through the central portion of battery holder 20 in the horizontal direction. In battery assembly 10 shown in FIG. 3, partition gap 24 is provided in a central portion of battery assembly 10 to partition battery block 11 into two battery units 12 on the left and right. As illustrated in FIG. 4, battery blocks 11 disposed in the four stages in the front and the rear are disposed such that partition gaps 24 of battery blocks 11 are linearly disposed, thereby partitioning entire battery assembly 10 into left and right. Battery assembly 10 is disposed at a fixed position by inserting horizontal structural body 7 into partition gap 24 communicating across battery blocks 11. Battery assembly 10 has a structure in which one battery block 11 includes one battery holder 20, and partition gap 24 passes through the central portion of battery holder 20, allowing horizontal structural body 7 to be inserted through partition gap 24. Alternatively, the battery assembly may have a structure in which one battery block includes two battery holders, and the horizontal structural body may be disposed with a partition gap formed between the two battery holders.

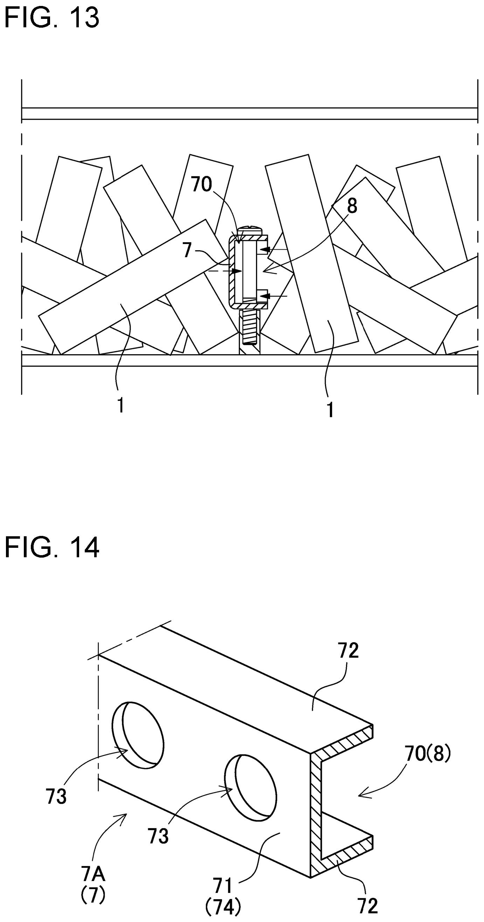

Horizontal structural body 7 passes through battery assembly 10 may include gas-discharge passage 8 communicating the inside and outside of battery assembly 10 with each other, as a structure having ventilation portion 70 extending in an axial direction, as a cross-sectional shape having a groove or a tubular portion. The horizontal structural body illustrated in FIG. 3 has therein a groove having an angular U-shape in a cross-sectional view, and an inside of the groove is ventilation portion 70. Horizontal structural body 7 having this structure efficiently discharges the gas inside battery assembly 10 to the outside through ventilation portion 70 as gas-discharge passage 8. As illustrated in FIG. 13, when fire spreads inside power supply device 100, even if a large number of secondary battery cells 1 randomly overlap one another due to, for example, combustion of battery assembly 10 and melting of battery holder 20, horizontal structural body 7 forms gas-discharge passage 8 between overlapping secondary battery cells 1 to allow the inside and the outside of battery assembly 10 to communicate with each other, and the gas generated from internal secondary battery cells 1 is guided to the outside of battery assembly 10 and discharged. Therefore, horizontal structural body 7 preferably has a shape that allows the inside and outside of battery assembly 10 to communicate with each other to secure an air passage even in a state where a large number of secondary battery cells 1 are folded and fallen. Horizontal structural body 7 illustrated in FIG. 3 has the U-shape in the cross-sectional view, and has a posture in which an opening of the groove is oriented horizontally. Horizontal structural body 7 allows the gas to flow in from the horizontal opening, flow to gas-discharge passage 8, and be discharged to the outside.

As illustrated in FIG. 14, in horizontal structural body 7 having a U-shaped cross-section, ventilation holes 73 may be opened in vertical surface 74 which is side surface 71. Horizontal structural body 7 having this structure has an advantage of allowing the gas to flow into horizontal structural body 7 from vertical surface 74, which is a bottom surface of the groove, through ventilation hole 73. Further, there is an advantage that a weight can be reduced by opening ventilation hole 73. In horizontal structural body 7A shown in FIG. 14, ventilation holes are not provided in upper and lower horizontal surfaces 72, and ventilation holes 73 are opened only in vertical surface 74 which is side surface 71. In this structure, upper horizontal surface 72 has a plate shape without a ventilation hole, so that ventilation portion 70 is formed inside the groove while preventing foreign matter from entering the inside. Further, horizontal structural body 7 having the U-shape cross-section may be disposed in a posture in which the opening of the groove faces downward. Since this structure effectively prevents foreign matter from entering the ventilation portion formed by the groove, even when the battery holder is melted and the secondary battery cells fall and overlap one another, the ventilation portion securely serves as gas-discharge passage 8.

As horizontal structural body 7, a channel steel which is steel beam may be used. Horizontal structural body 7 made of the steel beam has an advantage of increasing rigidity while achieving high heat resistance. Further, as the steel beam having a cross-section with a groove or a tubular portion, other than the channel steel illustrated in the drawing, an angle steel beam, a C-steel beam, an I-steel beam, an H-steel beam, a T-steel beam, a steel pipe, a square steel pipe, or the like may be used. Thus, there is an advantage that horizontal structural body 7 is inexpensive and manufacturing cost is reduced by selectively using commercially available steel beam. Horizontal structural body 7 is not limited to steel, and may be made of another metal. For example, the horizontal structural body may be made of aluminum or an aluminum alloy. Horizontal structural bodies made of aluminum or an aluminum alloy have an advantage of being lightweight while having an optimal cross-sectional shape by extrusion molding.

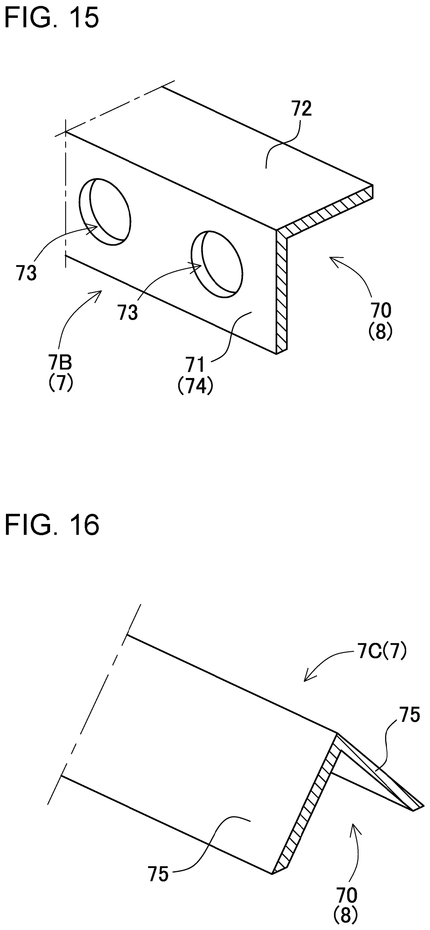

FIGS. 15 to 18 illustrate another example of horizontal structural body 7 made of the steel beam. Horizontal structural body 7B illustrated in FIG. 15 is made of an angle steel beam. As illustrated in the drawing, horizontal structural body 7B may be disposed in a state where ventilation portion 70 is formed between vertical surface 74 which is side surface 71 and horizontal surface 72 which is an upper surface by being disposed in an inverted L-shaped posture. Horizontal structural body 7B may have ventilation holes 73 opened in vertical surface 74. As illustrated in FIG. 16, horizontal structural body 7B made of an angle steel may be disposed in a posture in which horizontal structural body 7B has a mountain shape in a front view, and two surfaces of L-shape may be inclined surfaces 75. Horizontal structural body 7C in which the angle steel is disposed in this manner has an advantage that ventilation portion 70 formed inside the two surfaces faces downward, allowing gas-discharge passage 8 to be formed efficiently.

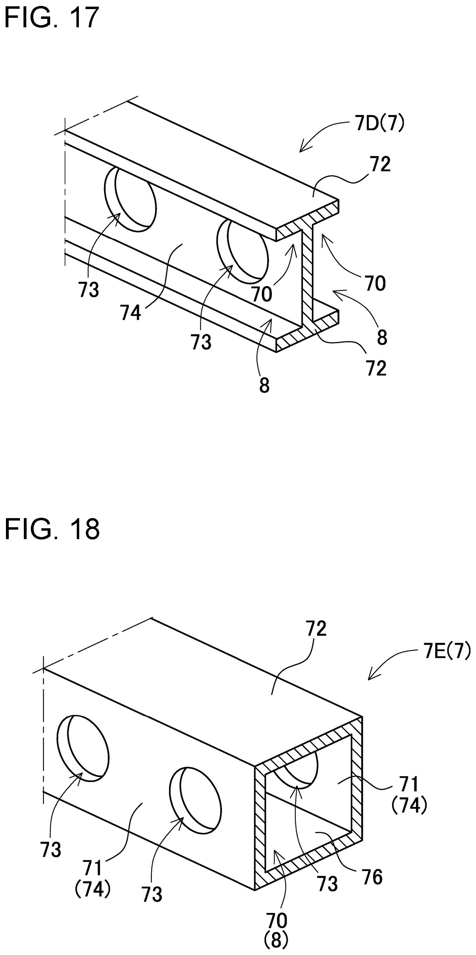

Horizontal structural body 7D illustrated in FIG. 17 is an I-steel beam. In horizontal structural body 7D, ventilation portion 70 is formed between vertical surface 74 located in a central portion and horizontal surface 72 vertically coupled thereto. Horizontal structural body 7D may have ventilation holes 73 opened in vertical surface 74.

Horizontal structural body 7E illustrated in FIG. 18 is a square steel pipe having a rectangular tubular cross-sectional shape. Thus, horizontal structural body 7E having a tubular cross-sectional shape may form gas-discharge passage 8 with the internal space as ventilation portion 70. In the horizontal structural body, ventilation holes 73 are preferably opened in surfaces other than an upper surface, for example, both side surfaces 71 and bottom surface 76, so that the gas can efficiently flow in from the outside. Thus, horizontal structural body 7E having a tubular cross-sectional shape has an advantage that gas-discharge passage 8 is stably formed inside horizontal structural body 7E regardless of an installation angle, in other words, even when the installation angle changes due to fire spreading, and air inside battery assembly 10 is reliably exhausted to the outside.

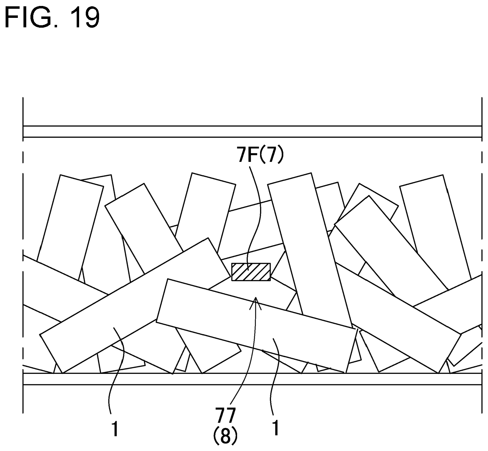

As described above, horizontal structural body 7 has the cross-sectional shape having the groove or the tubular portion to form ventilation portion 70 in horizontal structural body 7, thereby effectively forming gas-discharge passage 8. The horizontal structural body does not necessarily have the cross-sectional shape having the groove or the tubular portion. This is because a horizontal structural body having a cross-sectional shape that is not a groove shape or a tubular shape does not have a ventilation portion formed due to the cross-sectional shape, but an air passage may be secured at least below the horizontal structural body. For example, horizontal structural body 7F illustrated in FIG. 19 is a metal rod having a rectangular cross-sectional shape. In this case, a ventilation portion is not formed in horizontal structural body 7F itself. However, as illustrated in the drawing, even when a large number of secondary battery cells 1 fall so that secondary battery cells 1 overlap one another, a space serving as air passage 77 is secured below horizontal structural body 7F. This is because secondary battery cells 1 do not securely contact an entire lower surface of horizontal structural body 7F. Therefore, as illustrated in FIG. 19, even horizontal structural body 7F having no ventilation portion provides air passage 77 below horizontal structural body 7F serving as gas-discharge passage 8 to exhaust a gas from the inside to the outside of battery assembly 10. Therefore, in the present description, gas-discharge passage 8 is used in a broad sense including not only a passage formed by ventilation portion 70 of horizontal structural body 7 but also a passage formed by air passage 77 disposed below or around horizontal structural body 7.

Horizontal structural body 7 described above has a predetermined length passing through battery assembly 10, and is fixed to external case 2 with fixing device 78 at a fixed position. Fixing device 78 illustrated in the drawing is a bolt. Fixing device 78, the bolt, is screwed into, for example, fixing portion 79 provided in external case 2 and fixed at a fixed position. External case 2 illustrated in the drawing includes inner case 3 accommodating battery assembly 10, and fixing portion 79 fixed to lower surface plate 31 of inner case 3. Fixing portion 79 shown in the drawing is a nut having a threaded hole into which the bolt as fixing device 78 can be screwed, and horizontal structural body 7 is screwed and fixed to fixing portion 79 with the bolt. As described above, a structure in which horizontal structural body 7 is fixed to inner case 3 has an advantage of increasing rigidity of inner case 3 and reinforcing inner case 3 with horizontal structural body 7. In particular, even when a gas is generated inside inner case 3 and a large load is applied to inner case 3 at the time of abnormality, it is possible to achieve an advantage that deformation or breakage of inner case 3 is reduced. Horizontal structural body 7 is screwed and fixed to fixing portion 79 provided on lower surface plate 31 of inner case 3 is easily and rigidly fixed, and is disposed at a fixed position in battery assembly 10. Horizontal structural body 7 illustrated in FIG. 2 is fixed to inner case 3 with fixing portions 79 at three positions: both end portions and a central portion. Horizontal structural body 7 illustrated in the drawing is fixed to inner case 3 by screwing a bolt, which passes through an upper surface and a lower surface of a groove having an opening facing horizontally, into fixing portion 79. The fixing device fixing the horizontal structural body is not limited to the above structure. The horizontal structural body may be fixed by various methods. Further, in the external case not including the inner case, the fixing portion on a bottom surface plate of the external case fixes the horizontal structural body at a fixed position on the external case with the fixing portion.

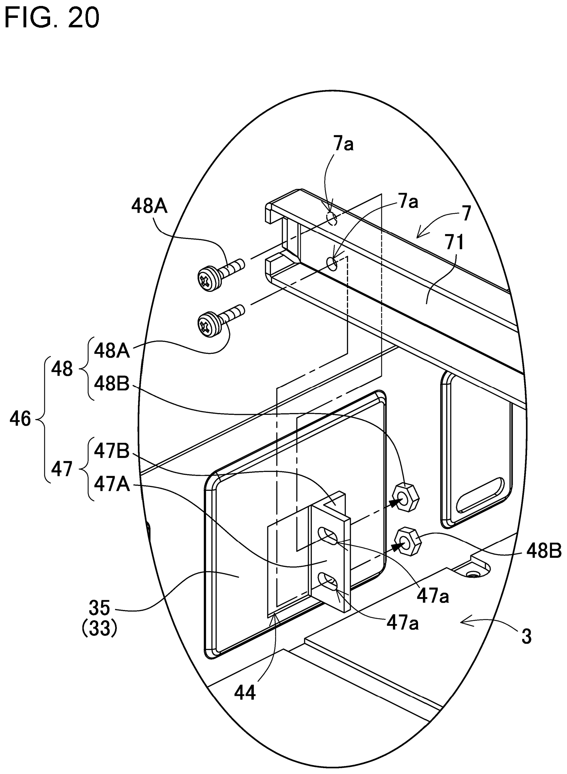

Although the structure in which lower surface plate 31 is fixed via fixing portion 79 is just an example as a fixing structure of horizontal structural body 7, other fixing structures may be adopted. FIG. 20 illustrates an example of a structure in which an end portion of horizontal structural body 7 is fixed to outer peripheral wall 33 of inner case 3. The illustrated fixing structure illustrates a state in which horizontal structural body 7 is fixed with fixing member 46 to inner plate 35 constituting outer peripheral wall 33 of inner case 3. Fixing member 46 illustrated in the drawing includes bracket 47 fixed to inner plate 35, and fixing device 48 fixing the end portion of horizontal structural body 7 to bracket 47. Bracket 47 shown in the drawing is an L-shaped bracket including coupling piece 47A and fixing piece 47B. Fixing piece 47B is fixed to a predetermined position on inner plate 35 so that coupling piece 47A is disposed vertically along an opening edge of insertion opening 44. Fixing piece 47B is fixed to inner plate 35 by, for example, welding or screwing. Coupling piece 47A has insertion holes 47a therein into which bolts 48A of fixing device 48 is inserted. Insertion hole 47a shown in the drawing is an elongated hole elongatedly extending in the horizontal direction and allows a coupling position with horizontal structural body 7 to be adjusted. Further, in horizontal structural body 7, through-holes 7a passing through side surface 71 are provided at positions facing insertion holes 47a provided in bracket 47. Bolts 48A inserted into through-holes 7a are inserted into insertion holes 47a of bracket 47. Nuts 48B are screwed to tips of bolts 48A to fix horizontal structural body 7 to bracket 47. Horizontal structural body 7 fixed to bracket 47 is fixed to a fixed position on outer peripheral wall 33 while being disposed in a predetermined posture with respect to insertion opening 44 of inner plate 35.

In the above-described fixing structure, both end portions of horizontal structural body 7 are fixed to outer peripheral wall 33 of inner case 3 by fixing horizontal structural body 7 to bracket 47 fixed to inner plate 35 with fixing device 48. In inner case 3 illustrated in the drawing, since outer peripheral wall 33 has a double wall structure, a structure in which horizontal structural body 7 is fixed to inner plate 35 of outer peripheral wall 33 is illustrated, but in an inner case having an outer peripheral wall that does not have a laminated structure, both ends of the horizontal structural body may be directly fixed to the outer peripheral wall with a fixing device passing through the outer peripheral wall. For example, the horizontal structural body may be fixed to the outer peripheral wall by providing a bent piece on an end surface of the horizontal structural body and screwing a nut to a bolt passing through the bent piece and the outer peripheral wall.

Alternatively, it is also possible to adopt a configuration in which a round bar having both ends threaded is provided as the horizontal structural body, and a bracket and a nut attached to both ends of the round bar are provided as the fixing member. In this configuration, the bracket is attached to the outer peripheral wall of the inner case, and the round bar is fixed by screwing the nut to a tip of the round bar.

As described above, the structure in which both end portions of horizontal structural body 7 disposed in the central portion of inner case 3 are fixed to outer peripheral wall 33 of inner case 3 structurally reinforces a central portion of inner case 3. In particular, in this configuration, tension is applied to horizontal structural body 7 via fixing member 46 such as fixing device 48 or bracket 47, thereby enhancing the rigidity of inner case 3. Further, in the external case not including the inner case, both end portions of the horizontal structural body may be fixed to the outer peripheral wall of the external case with fixing members and disposed at a fixed position. This configuration also reinforces a central portion of the external case by fixing both end portions of the horizontal structural body disposed in the central portion of the external case to the outer peripheral wall.

### External Case 2

External case 2 is made of metal and has an accommodating space for accommodating battery assembly 10 therein. External case 2 preferably has a function of discharging an exhaust gas discharged from secondary battery cells 1 constituting battery assembly 10 to the outside while reducing a discharge amount of the exhaust gas. As such external case 2, external case 2 including inner case 3 and outer case 5 may be used. External case 2 shown in the drawing includes: inner case 3 accommodating battery assembly 10 therein; and outer case 5 covering inner case 3.

### Inner Case 3

Inner case 3 illustrated in FIGS. 5 to 10 is made of metal, has a box shape including lower surface plate 31 and upper surface plate 32 which are connected with outer peripheral wall 33, and accommodates battery assembly 10 including secondary battery cells 1 disposed at the fixed positions. In inner case 3 made of a metal plate, a part of outer peripheral wall 33 has a laminated structure. In inner case 3 illustrated in the drawing, side walls 33X of outer peripheral wall 33 opposite to each other have laminated structures at which inner plate 35 and outer plate 36 are stacked on each other form laminated portions 34.

Laminated portion 34 of inner case 3 illustrated in FIGS. 7 and 8 has recess 40 partially in an outer side surface of inner plate 35 which is a surface of inner plate 35 facing outer plate 36. Recess 40 has a predetermined depth and extends in a surface direction along the outer side surface of inner plate 35. Another recess 40 is formed partially in an inner side surface of outer plate 36 which is a facing surface of outer plate 36 facing inner plate 35. Recess 40 has a predetermined depth and extends in a surface direction along the inner side surface of outer plate 36 As illustrated in FIGS. 9 and 10, inner plate 35 and outer plate 36 has recesses 40 at positions facing each other. Inner plate 35 and outer plate 36 are stacked on each other such that recesses 40 facing each other to form exhaust duct 4 having a structure closed between inner plate 35 and outer plate 36.

In inner plate 35 and outer plate 36 made of metal plates, recesses 40 are formed by drawing. Inner plate 35 illustrated in FIG. 10 has recess 40 by drawing the facing surface to outer plate 36 to the predetermined depth. Outer plate 36 has another recess 40 by drawing the facing surface to inner plate 35 to the predetermined depth. The depth (d) of recess 40 may range, for example, from 3 mm to 5 mm. Therefore, an inner width (D) of exhaust duct 4 formed by recesses 40 facing each other may range from 6 mm to 10 mm. Recess 40 illustrated in FIGS. 7 and 8 has a rectangular shape in a front view, and extends in the vertical direction along inner plate 35 and outer plate 36 to have a predetermined vertical width (L), and has a shape having a lateral width (W) extending in the left-right direction. The vertical width (L), the lateral width (W), and the depth (d) of recess 40 forming exhaust duct 4 are adjusted to adjust the volume of exhaust duct 4.

Inner case 3 illustrated in FIGS. 5 to 10 has plural exhaust ducts 4 in side walls 33X opposite to each other. For example, exhaust ducts 4 may have the same shape and size such that the vertical widths (L) and the lateral widths (W) of recesses 40 are equal to one another, and exhaust ducts 4 may be arranged at equal intervals. Thus, exhaust ducts 4 arranged at equal intervals allow the gas filling inner case 3 to be smoothly exhausted to the outside in a well-balanced manner. In inner case 3 illustrated in the drawing, exhaust duct 4 having the large lateral width (W) is provided in a central portion of side wall 33X, and three exhaust ducts 4 having the lateral width (W) smaller than that of exhaust duct 4 in the central portion are provided in both sides thereof, and are disposed side by side at equal intervals. The size of exhaust duct 4 is determined by recess 40 forming exhaust duct 4. The vertical width (L) of recess 40 may range from 50% to 80% of a height (Z) of outer peripheral wall 33, and may range, for example, from 8 cm to 20 cm. The lateral width (W) of recess 40 may be changed depending on the number of exhaust ducts 4 provided in side wall 33X and the intervals between exhaust ducts 4, and may range, for example, from 5 cm to 25 cm. In inner case 3 in which exhaust ducts 4 are provided in side wall 33X, the sum of the lateral widths (W) of exhaust ducts 4 ranges, for example, from 40% to 60% of a total length (X) of side wall 33X.

The sizes, the shapes, and the number of exhaust ducts 4 formed in side wall 33X may be variously changed. For example, as illustrated in FIG. 5, while the lateral width of exhaust duct 4 out of exhaust ducts 4 in side wall 33X which is provided in the central portion may larger than the other ducts, the lateral widths of exhaust ducts 4 disposed on both end sides may be smaller than the duct in the central portion. All exhaust ducts 4 may have the same lateral width. In inner case 3, the positions and the number of exhaust ducts 4 provided in outer peripheral wall 33 may be changed. The inner case may have an exhaust duct in an end surface wall.

Inner plate 35 illustrated in FIGS. 7 to 11 has inner opening 41 in a bottom surface of recess 40. Exhaust duct 4 communicates with the inside of inner case 3 via inner opening 41 opened in inner plate 35. Outer plate 36 illustrated in FIGS. 7 to 11 has outer opening 42 in a bottom surface of recess 40. Exhaust duct 4 communicates with an outside of inner case 3 via outer opening 42 opened in outer plate 36. In inner case 3 illustrated in FIGS. 9 and 10, each of inner opening 41 and outer opening 42 is disposed at a corresponding one of both end portions of exhaust duct 4, thereby providing a long discharge path of the gas passing through exhaust duct 4. Exhaust duct 4 illustrated in the drawing extends in the vertical direction, and has inner opening 41 and outer opening 42 located at both upper and lower end portions. In exhaust duct 4, a discharge path of exhaust duct 4 may be lengthened by increasing the vertical width (L) of recess 40.

In power supply device 100 illustrated in FIGS. 9 and 10, secondary battery cells 1 accommodated in inner case 3 are disposed in a posture such that first end surface 1A including the discharge valve faces upward, exhaust duct 4 formed in laminated portion 34 of side wall 33X extends in the vertical direction, inner opening 41 is opened in a lower side of exhaust duct 4, and outer opening 42 is opened in an upper side of exhaust duct 4. Thus, in the case that secondary battery cells 1 are disposed such that the discharge valve faces upward, when one of secondary battery cells 1 has a failure and discharges an ejected material such as a gas, the ejected material discharged from an upper surface of battery assembly 10 flows from upper gap 15 formed between an upper surface of battery assembly 10 and upper surface plate 32 of inner case 3 toward side wall 33X as indicated by arrow A shown in FIGS. 9 and 10. At this moment, since inner opening 41 of exhaust duct 4 provided in side wall 33X is opened in a lower side of side wall 33X, the ejected material such as a gas flowing from upper gap 15 toward side wall 33X descends along side gap 16 formed between side wall 33X of inner case 3 and battery assembly 10 as indicated by arrow B, and is guided to exhaust duct 4 from inner opening 41 opened in a lower portion of side gap 16 and is exhausted. This configuration increases a length of a flow path through which an ejected material such as a gas discharged from secondary battery cell 1 is guided to exhaust duct 4, sufficiently reduces a pressure and temperature of the gas inside inner case 3, and then allows the gas to be discharged the outside.

In inner case 3 illustrated in FIGS. 5 to 10, inner opening 41 and outer opening 42 have a slit shape extending in a lateral width direction. The openings having this shape effectively reduce the pressure and temperature of the gas while increasing an amount of the ejected material flowing into exhaust duct 4. In inner opening 41 and outer opening 42 illustrated in FIGS. 7 and 8, a slit length (s) may range from 50% to 90% of the lateral width (W) of recess 40, and a slit width (t) may range from 1 time to 5 times the depth (d) of recess 40. By adjusting opening areas of inner opening 41 and outer opening 42, inner case 3 may adjust a flow rate of the ejected material such as a gas flowing into exhaust duct 4.

As illustrated in FIG. 11, exhaust duct 4 located at the central portion of side wall 33X is connected to a tip of horizontal structural body 7. An opening end of horizontal structural body 7 illustrated in the drawing is disposed inside exhaust duct 4 and is opened inside exhaust duct 4, and gas-discharge passage 8 communicates with the inside of exhaust duct 4. This structure has an advantage that the gas generated inside battery assembly 10 is guided to exhaust duct 4 provided in inner case 3 while being efficiently discharged to the outside of battery assembly 10. Inner case 3 has insertion opening 44 in inner plate 35 to connect horizontal structural body 7 to exhaust duct 4. Insertion opening 44 has a shape and a size to allow horizontal structural body 7 to be inserted and allow gas-discharge passage 8 to communicate with exhaust duct 4.

As described above, as illustrated in FIGS. 7 and 8, inner case 3 in which exhaust duct 4 is formed in laminated portion 34 with side wall 33X as a laminated structure can be constituted by lower case 30A including lower surface plate 31 and inner plates 35 connected vertically to both sides of lower surface plate 31, and upper case 30B including upper surface plate 32 and outer plates 36 connected vertically to both sides of upper surface plate 32.

In lower case 30A, inner plates 35 are connected in an upright posture to both sides of lower surface plate 31 on which battery assembly 10 is placed. Fixing pieces 38 for connecting end surface plate 37 of upper case 30B to closing plate 27 for forming discharge path 25 are connected to both ends of lower surface plate 31. Fixing piece 38 includes fixing portion 38A for fixing battery holder 20 of battery assembly 10 by bending a tip portion inward to be in a horizontal posture. Battery assembly 10 is fixed to fixing portion 38A of fixing piece 38 with screw 19 penetrating boss 20a provided on battery holder 20. Insulating sheet 18 is placed on a lower surface of battery assembly 10 fixed to lower case 30A to insulate secondary battery cells 1 from lower surface plate 31. Lower case 30A is formed by cutting a metal plate to have a predetermined shape, forming recess 40 in inner plate 35 by drawing, opening inner opening 41 by punching, and bending inner plate 35 and fixing piece 38 to have a predetermined posture with respect to lower surface plate 31.

In upper case 30B, outer plates 36 are connected vertically to both sides of upper surface plate 32, and end surface plate 37 is connected vertically to one end of upper surface plate 32. Upper case 30B illustrated in the drawing is reinforced by stepped uneven portions 39 formed in upper surface plate 32. Stepped uneven portion 39 has a projecting shape protruding upward with respect to a main body of planar upper surface plate 32, and extends in a width direction intersecting an extending direction of side wall 33X in the plan view. Stepped uneven portions 39 are provided at equal intervals and parallel to one another. Upper case 30B is formed by cutting a metal plate to have a predetermined shape, forming recess 40 in outer plate 36 and stepped uneven portion 39 in upper surface plate 32 by drawing, opening outer opening 42 by punching, and bending outer plate 36 and end surface plate 37 to have a predetermined posture with respect to upper surface plate 32.

As illustrated in FIGS. 9 and 10, inner case 3 is formed by stacking outer plate 36 of upper case 30B on an outer side of inner plate 35 provided on lower case 30A and connecting lower case 30A to upper case 30B. In this structure, lower case 30A including inner plates 35 on both sides is connected to upper case 30B including outer plates 36 on both sides, so that side wall 33X can simply and easily have the laminated structure and exhaust duct 4 can be formed in laminated portion 34. Inner plate 35 and outer plate 36 stacked on each other are rigidly fixed in a close contact by, for example, screwing. Upper case 30B illustrated in the drawing includes end surface plate 37 connected vertically to the one end of upper surface plate 32, and end surface plate 37 is fixed by screwing to fixing piece 38 connected to one end of lower surface plate 31.

In the inner case, the lower case may include the lower surface plate and the outer plates connected vertically to both sides of the lower surface plate, and the upper case may include the upper surface plate and the upper plates connected vertically to both sides of the upper surface plate. In the inner case, the lower case and the upper case are connected to each other to provide a laminated portion by stacking the outer plate on the inner plate while the inner plates of the upper case are inserted between the outer plates of the lower case.

In inner case 3, one of facing end surface walls 33Y of outer peripheral wall 33 is closed as end surface plate 37, and the other includes discharge path 25 having a collision structure communicating with the inside of inner case 3. Discharge path 25 having the collision structure illustrated in FIG. 4 includes a pair of collision plates 26 provided on both side portions of an end surface of inner case 3, and closing plate 27 disposed closer to battery assembly 10 than collision plates 26 and provided with gap 28 between closing plate 27 and both side walls 33X while being fixed to fixing piece 38. Each of collision plates 26 includes bent portion 26A by bending a tip portion of the collision plate on a center side inward, and closing plate 27 is bent at both end portions of the upper surface plate toward the collision plate 26 to provide bent pieces 27A. As illustrated by arrows in FIG. 4, discharge path 25 having this structure has a structure in which the gas passing through gap 28 provided between bent piece 27A of closing plate 27 and side wall 33X collides with collision plate 26, and the gas whose flow direction is changed by collision plate 26 is changed in direction toward closing plate 27 by bent portion 26A of collision plate 26 and collides with closing plate 27, and then is discharged to the outside from wiring opening 29 opened in the end surface. Discharge path 25 prevents the ejected material, such as a gas discharged from secondary battery cell 1, from turning into a straight flame and being ejected from inner case 3 to the outside by drawing a lead wire or an output line drawn from battery assembly 10 to the outside of inner case 3 in a non-linear meandering manner.

### Outer Case 5

As illustrated in FIGS. 1 to 6, outer case 5 has a box shape, and accommodates therein inner case 3 which accommodates battery assembly 10 therein, with an inside of outer case 5 being hollow. Outer case 5 illustrated in the drawing are made of metal plates combined. In the example illustrated in exploded perspective views in FIGS. 5 and 6, outer case 5 has an entire outer shape of a box shape by connecting bottom surface plate 51 and top plate 52 facing each other by side plates 53 on both sides and end surface plates 54 on both ends.

Outer case 5 illustrated in FIGS. 5 and 6 includes first case 50A, second case 50B, and third case 50C. First case 50A includes top plate 52, side plates 53 connected to both sides of top plate 52, and end surface plate 54 connected to one end of top plate 52. Second case 50B includes bottom surface plate 51 and fixing pieces 55. Fixing pieces 55 fix side plates 53 to end surface plate 54 of first case 50A provided on both sides and one end of bottom surface plate 51. Third case 50C includes closing plate 56 disposed on an end surface facing end surface plate 54 provided on first case 50A. Outer case 5 has an entire outer shape of a box shape formed by connecting these cases to one another.

Outer case 5 illustrated in FIGS. 5 and 6 includes stepped uneven portions 58 in bottom surface plate 51. Stepped uneven portion 58 has a projecting shape protruding upward with respect to a main body of planar bottom surface plate 51, and extends in a lateral direction of outer case 5. Stepped uneven portions 58 are provided parallel to one another and reinforce bottom surface plate 51 to which inner case 3 is fixed.

In outer case 5 illustrated in FIGS. 5 and 6, top plate 52 includes stepped uneven portions 59. Stepped uneven portion 59 of planar top plate 52 has a projecting shape protruding downward with respect to a main body of top plate 52, and extends in the lateral direction of outer case 5. Stepped uneven portions 59 are parallel to one another. Top plate 52 faces upper surface plate 32 of inner case 3 such that stepped uneven portions 59 protruding downward from top plate 52 are disposed alternatively with uneven portions 39 protruding upward provided on upper surface plate 32 of inner case 3. In this structure, stepped uneven portion 59 protruding downward from top plate 52 of outer case 5 is disposed in a recess formed between stepped uneven portions 39 protruding upward from upper surface plate 32 of inner case 3, thereby preventing the size of outer case 5 from increasing while reinforcing outer case 5.

### Hole 57

Outer case 5 has holes 57 therein allowing a gas to pass through the holes in a part of the outer surface thereof in order to discharge, to the outside of outer case 5, a sprayed substance, such as a gas, discharged from secondary battery cells 1 accommodated in inner case 3 and discharged to the outside of inner case 3 while preventing the sprayed substance from forming a flame. In outer case 5 illustrated in the drawing, mesh 57A made of metal is disposed on end surface plate 54 provided on an end surface to form holes 57. In the outer case, a punched metal may be disposed to form the holes. In the outer case described above, a high-temperature and high-pressure gas discharged from the inner case is discharged to the outside of outer case 5 through holes 57, thereby effectively preventing the ejected material from secondary battery cell 1 from turning into a flame and being ejected to the outside of outer case 5.

### Circuit Board 61

Power supply device 100 illustrated in FIGS. 3 to 6 further includes circuit board 61 disposed in substrate chamber 60 provided in third case 50C on the other end surface side of outer case 5. Third case 50C illustrated in FIGS. 3 and 4 forms substrate chamber 60 partitioned from an internal space of outer case 5 by shielding plate 62 disposed inside closing plate 56, and protects circuit board 61 from a sprayed substance, such as a high-temperature and high-pressure gas, discharged from inner case 3. Circuit board 61 has, e.g., a charge and discharge circuit and a protection circuit mounted thereon. The charge and discharge circuit is configured to charge and discharge secondary battery cell 1. The protection circuit is configured to monitor a voltage and temperature of secondary battery cell 1 and cut off a current at the time of abnormality. Further, in outer case 5 illustrated in the drawing, positive and negative output terminals 63 and signal terminal 64 connected to circuit board 61 are disposed while being exposed from closing plate 56 of third case 50C.

In outer case 5 described above, inner case 3 is fixed to bottom surface plate 51 of second case 50B, a lead wire or an output line drawn out from inner case 3 is connected to circuit board 61 of third case 50C fixed to second case 50B, and then, first case 50A is connected to second case 50B and third case 50C. Side plate 53 and end surface plate 54 of first case 50A are fixed to fixing pieces 55 of second case 50B with screws 69, and third case 50C is fixed to the other end of first case 50A with screw 69, thus providing outer case 5 with a box shape.

### Exemplary Embodiment 2

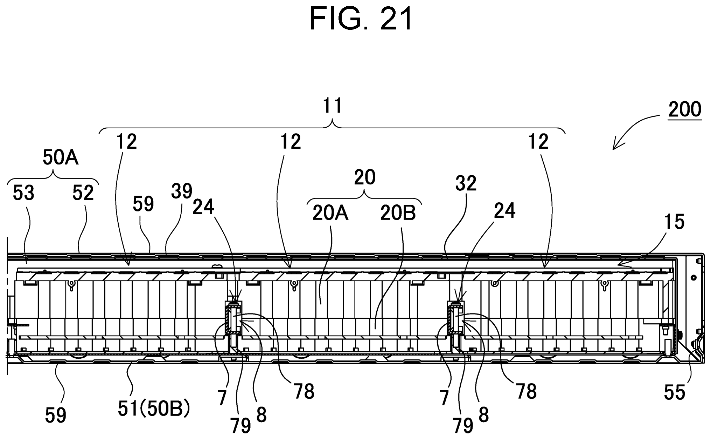

While power supply device 100 described above includes one horizontal structural body 7 passing through the central portion of battery assembly 10, the power supply device may include plural horizontal structural bodies 7 passing through battery assembly 10. Power supply device 200 illustrated in FIG. 21 includes two horizontal structural bodies 7 disposed in battery assembly 10. The number and disposition of secondary battery cells 1 to be accommodated in battery assembly 10 are individually designed depending on an intended use and purpose. Therefore, in the power supply device, the number of horizontal structural bodies disposed in the battery assembly may be changed according to the number and disposition of the secondary battery cells accommodated in the battery assembly. Power supply device 200 illustrated in the drawing efficiently exhausts a gas generated inside battery assembly 10 to the outside through two horizontal structural bodies 7.

### INDUSTRIAL APPLICABILITY

A power supply device according to the present disclosure can be suitably used as a power supply for a power storage system for homes, businesses, and factories in a stationary power storage application, or a backup power supply for servers, or a power supply for vehicles such as hybrid vehicles and electric vehicles.

### REFERENCE MARKS IN THE DRAWINGS

- 100, 200: power supply device
- 1: secondary battery cell
- 1A: first end surface
- 1a: center electrode
- 1b: caulking ridge
- 2: external case
- 3: inner case
- 4: exhaust duct
- 5: outer case
- 7: horizontal structural body
- 7a: through-hole
- 8: gas-discharge passage
- 10: battery assembly
- 11: battery block
- 12: battery unit
- 13: lead plate
- 13A: main body
- 13a: first coupling tab
- 13b: second coupling tab
- 14: coupling bus bar
- 15: upper gap
- 16: side gap
- 18: insulating sheet
- 19: set screw
- 20: battery holder
- 20A: first holder
- 20B: second holder
- 20a: boss
- 21: holding portion
- 22: insulating wall
- 23: electrode window
- 24: partition gap
- 25: discharge path
- 26: collision plate
- 26A: bent portion
- 27: closing plate
- 27A: bent piece
- 28: gap
- 29: wiring opening
- 30A: lower case
- 30B: upper case
- 31: lower surface plate
- 32: upper surface plate
- 33: outer peripheral wall
- 33X: side wall
- 33Y: end surface wall
- 34: laminated portion
- 35: inner plate
- 36: outer plate
- 37: end surface plate
- 38: fixing piece
- 38A: fixing portion
- 39: stepped uneven portion
- 40: recess
- 41: inner opening
- 42: outer opening
- 44: insertion opening
- 46: fixing member
- 47: bracket
- 47A: coupling piece
- 47a: insertion hole
- 47B: fixing piece
- 48: fixing device
- 48A: bolt
- 48B: nut
- 50A: first case
- 50B: second case
- 50C: third case
- 51: bottom surface plate
- 52: top plate
- 53: side plate
- 54: end surface plate
- 55: fixing piece
- 56: closing plate
- 57: hole
- 57A: metal mesh
- 58: stepped uneven portion
- 59: stepped uneven portion
- 60: substrate chamber
- 61: circuit board
- 62: shielding plate
- 63: output terminal
- 64: signal terminal
- 69: fixing screw
- 70: ventilation portion
- 71: side surface
- 72: horizontal surface
- 73: ventilation hole
- 74: vertical surface
- 75: inclined surface
- 76: bottom surface
- 77: air passage
- 78: fixing device
- 79: fixing portion
- 90: battery assembly
- 91: secondary battery cell
- 92: battery holder

## Claims

1. A power supply device comprising:
a battery assembly including a plurality of secondary battery cells and a battery holder made of resin and disposing the plurality of secondary battery cells at fixed positions, each of the plurality of secondary battery cells including a discharge valve configured to open when an internal pressure of the each of the plurality of secondary battery cells exceeds a predetermined pressure; and
an external case accommodating the battery assembly therein, wherein
the battery assembly further includes a horizontal structural body made of metal and passing through a central portion of the battery assembly in a horizontal direction, and
the power supply device has a gas-discharge passage communicating an inside and an outside of the battery assembly with each other via the horizontal structural body.

2. The power supply device according to claim 1, wherein the horizontal structural body has a cross-sectional shape having a groove or a tubular portion constituting a ventilation portion extending in an axial direction.

3. The power supply device according to claim 2, wherein the horizontal structural body is made of a steel beam.

4. The power supply device according to claim 3, wherein the steel beam is one of a channel steel beam, an angle steel beam, a C-steel beam, an I-steel beam, an H-steel beam, a T-steel beam, a steel pipe, and a square steel pipe.

5. The power supply device according to claim 2, wherein the horizontal structural body has a plurality of ventilation holes opened in one of a side surface, a vertical surface, and a bottom surface thereof.

6. The power supply device according to any one of claims 1 to 5, wherein
the battery holder has a partition gap provided therein, the partition gap extending in the horizontal direction and partitioning the battery assembly, and
the horizontal structural body is inserted into the partition gap.

7. The battery pack according to any one of claims 1 to 5, wherein the battery holder accommodates the plurality of secondary battery cells disposed in vertical postures and arranged parallel to one another in the horizontal direction.

8. The power supply device according to any one of claims 1 to 5, wherein the horizontal structural body is fixed to the external case.

9. The power supply device according to claim 8, wherein
the external case includes:
an inner case accommodating the battery assembly therein; and
an outer case covering the inner case,
the inner case has a box shape including a lower surface plate, an upper surface plate, and an outer peripheral wall connecting the lower surface plate to the upper surface plate, the inner case further including a fixing portion on the lower surface plate for fixing the horizontal structural body, and
the horizontal structural body is fixed to the fixing portion with a fixing device.

10. The power supply device according to claim 8, wherein
the external case includes:
an inner case accommodating the battery assembly therein; and
an outer case covering the inner case,
the inner case has a box shape including a lower surface plate, an upper surface plate, and an outer peripheral wall connecting the lower surface plate to the upper surface plate, and
both end portions of the horizontal structural body are fixed to the outer peripheral wall with fixing devices.

11. The power supply device according to any one of claims 1 to 5, wherein
the external case includes:
an inner case accommodating the battery assembly therein; and
an outer case covering the inner case,
the inner case includes an outer peripheral wall including an inner plate and an outer plate stacked on each other, a part of the outer peripheral wall where the inner plate and the outer plate are stacked on each other constitutes a laminated portion of the outer peripheral wall with a laminated structure,
the laminated portion has a recess having a predetermined depth and extending in a surface direction partially in one or both of respective surfaces of the inner plate and the outer plate facing each other, the recess constituting an exhaust duct closed between the inner plate and the outer plate,
the exhaust duct communicates with an inside of the inner case via an inner opening opened in the inner plate, and communicates with an outside of the inner case via an outer opening opened in the outer plate, and
the inner opening and the outer opening are disposed at both end portions of the exhaust duct.

12. The power supply device according to claim 11, wherein the horizontal structural body is connected to the exhaust duct of the inner case, and the gas-discharge passage communicates with an inside of the exhaust duct.
